# FASCICULE DE BREVET EUROPEEN

(11) **EP 1 566 871 B1**
(45) Date de publication et mention de la délivrance du brevet: **09.03.2011**
(21) Numéro de dépôt: 04292708.7
(22) Date de dépôt: 16.11.2004
(51) Int. Cl.: H02G 3/10

(54) **Boîte électrique à encastrer à moyen d'indexation à une goulotte**
Elektro-Einbaudose mit Indexierungsmitteln für Kabelkanal
Flush mounted electrical box with indexing means to a raceway

(30) Priorité: 04.12.2003 FR 0314226
(43) Date de publication de la demande: 24.08.2005
(73) Titulaire: Legrand France, 87000 Limoges (FR); Legrand SNC, 87000 Limoges (FR)
(72) Inventeur: Buard, Yvon, 53600 Voutre (FR); Mathieu, Tristan, 21000 Dijon (FR); Coquil, Jean-Yves, 72230 Guécélard (FR)
(74) Mandataire: Orsini, Fabienne

(56) Documents cités:
- EP-A- 0 440 556
- EP-A- 1 326 315

## Description

### Domaine technique auquel se rapporte l'invention

La présente invention concerne de manière générale les boîtes électriques à encastrer, destinées à recevoir des câbles et/ou des conducteurs électriques.

Elle concerne plus particulièrement une boîte électrique à encastrer dans un trou pratiqué dans une paroi, le long d'une goulotte rapportée en saillie sur ladite paroi, cette boîte électrique comportant un corps de boîte dont le volume intérieur forme un logement adapté à recevoir au moins un appareillage électrique, et un pied, prolongeant latéralement le corps de boîte, dont le volume intérieur communiquant avec ledit logement est adapté à recevoir des conducteurs électriques nécessaires à la desserte dudit appareillage électrique.

De telles boîtes sont notamment des boîtes pour appareillages électriques, des boîtes de dérivation de câbles et/ou de conducteurs électriques et des boîtes formant tableaux d'abonnés.

L'invention concerne également un procédé d'encastrement d'une telle boîte électrique.

### Arrière-plan technologique

On connaît déjà des documents EP 0 440 556 et EP 0 964 495 appartenant aux demanderesses, une boîte électrique du type précité dans laquelle il est prévu en bout de pied des pattes ou ailes de fixation latérales qui permettent la fixation de ladite boîte sur une surface plane correspondant au plancher à partir duquel s'élève la paroi recevant la boîte et la goulotte.

Pour poser une telle boîte électrique l'installateur réalise une rainure ou tranchée dans la paroi pour encastrer le pied et le corps de boîte de la boîte.

La réalisation d'une telle rainure ou tranchée à l'aide d'un burin par exemple ne permet pas d'obtenir une surface de pose nette pour la boîte électrique ce qui amène, en pratique, l'installateur à décaler la boîte électrique vers le haut de la paroi par rapport à la goulotte courant en plinthe.

Il en résulte un écart peu esthétique entre l'appareillage électrique reçu dans la boîte électrique encastrée et la goulotte dans laquelle courent les conducteurs ou câbles nécessaires à la desserte de cet appareillage.

### Objet de l'invention

Par rapport à l'état de la technique précité, l'invention propose une nouvelle disposition qui, en autorisant la mise en oeuvre d'une boîte électrique à encastrer à prolongement latéral dans le cas où les conducteurs électriques nécessaires à la desserte du ou des appareillage(s) contenu(s) dans ladite boîte sont disposés au sein d'une goulotte, est simple à mettre en oeuvre et esthétique du fait qu'elle permet d'obtenir un positionnement précis de la boîte électrique par rapport à la goulotte de sorte que la plaque enjoliveur de l'appareillage électrique monté dans ladite boîte vienne se placer à effleurement de ladite goulotte.

Plus particulièrement, l'invention propose une boîte électrique telle que définie en introduction, caractérisée en ce qu'elle comporte en saillie un moyen d'arrimage au socle de la goulotte, agencé pour indexer la position du corps de boîte dans ledit trou par rapport à celle du socle de la goulotte.

D'autres caractéristiques non limitatives et avantageuses de la boîte électrique selon l'invention sont les suivantes :
- le moyen d'arrimage est situé sur la face avant de ladite boîte électrique ;
- ledit moyen d'arrimage est situé en façade dudit pied à proximité de la jonction entre les volumes intérieurs du pied et du corps de boîte ;
- ledit moyen d'arrimage comprend une nervure qui s'étend transversalement à l'axe longitudinal dudit pied et qui est apte à s'engager dans une rainure qui court sur un côté longitudinal dudit socle ;
- ledit moyen d'arrimage est réalisé d'une seule pièce avec la boîte électrique par moulage d'une matière plastique ;
- ledit moyen d'arrimage est une pièce rapportée sur ladite boîte électrique ;
- le pied comporte deux parties, à savoir une partie fixe rattachée au corps de boîte et une partie mobile par rapport à ladite partie fixe ;
- ladite partie mobile est une partie télescopique qui coulisse par rapport à ladite partie fixe ;
- ladite boîte électrique comporte un accessoire de pose agencé pour indexer la position d'un centreur d'un outil de perçage, adapté à réaliser dans ladite paroi le trou de réception de ladite boîte électrique, par rapport à la position du socle de la goulotte, cet accessoire de pose comportant un moyen d'arrimage au socle de la goulotte et un moyen de positionnement dudit centreur qui sont séparés l'un de l'autre d'une distance égale à la distance séparant l'axe X de ladite boîte électrique de son moyen d'arrimage au socle de la goulotte ;
- le moyen d'arrimage de l'accessoire de pose comprend une nervure qui s'étend transversalement à l'axe longitudinal dudit accessoire de pose et qui est apte à s'engager dans une rainure qui court sur un côté longitudinal dudit socle ;
- le moyen de positionnement de l'accessoire de pose est un orifice traversant qui accueille le centreur ;
- l'accessoire de pose se présente sous la forme d'une plaquette dont la face avant porte ledit moyen d'arrimage ; et
- l'accessoire de pose vient de formation avec ladite boîte électrique par moulage d'une matière plastique et est rattaché à celle-ci par une liaison sécable.

L'invention concerne également une collerette adaptée à être rapportée sur une boîte électrique à encastrer dans un trou pratiqué dans une paroi, le long d'une goulotte rapportée en saillie sur ladite paroi, cette collerette étant destinée à border extérieurement l'ouverture frontale de ladite boîte électrique et comprenant un moyen d'arrimage au socle de ladite goulotte agencé pour indexer la position de la boîte électrique dans ledit trou par rapport à celle dudit socle de la goulotte.

Avantageusement, le moyen d'arrimage est une nervure située sur la face avant de ladite collerette.

L'invention concerne enfin un procédé d'encastrement dans une paroi de la boîte électrique selon l'invention ou d'une boîte électrique quelconque équipée d'une collerette selon l'invention, le long d'une goulotte à rapporter en saillie sur ladite paroi, caractérisé en ce qu'il comprend les étapes suivantes :
a) on réalise un trou dans ladite paroi à l'aide d'un outil de perçage,
b) on place ladite boîte électrique dans le trou pratiqué dans la paroi,
c) on rapporte le socle de goulotte sur ladite paroi de façon à arrimer ladite boîte électrique audit socle afin d'ajuster sa position dans le trou par rapport audit socle, et
d) on fixe le socle de goulotte sur ladite paroi et la boîte électrique dans sa position ajustée dans ledit trou.

Préférentiellement selon le procédé conforme à l'invention, préalablement à l'étape a) on réalise les étapes suivantes :
1) on arrime l'accessoire de pose au socle de la goulotte,
2) on place le socle de la goulotte à l'emplacement voulu sur la paroi de manière à plaquer sur ladite paroi l'accessoire de pose arrimé,
3) on fixe temporairement ledit accessoire de pose à ladite paroi, et
4) on enlève le socle de la goulotte de ladite paroi.

### Description détaillée d'un exemple de réalisation

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de face d'une boîte électrique ainsi qu'un accessoire de pose selon l'invention amarré à une goulotte ;
- la figure 2 est une vue en perspective avant de la figure 1 ;
- la figure 3 est une vue en perspective avant de détail de l'accessoire de pose de la figure 1 amarré à une goulotte ;
- la figure 4 est une vue en perspective arrière de la figure 1 ;
- la figure 5 est une vue en perspective avant d'une boîte électrique selon l'invention ;
- les figures 6A à 6C sont des schémas des étapes du procédé selon l'invention, et
- les figures 7A et 7B sont des schémas de deux étapes préalables préférentielles du procédé selon l'invention.

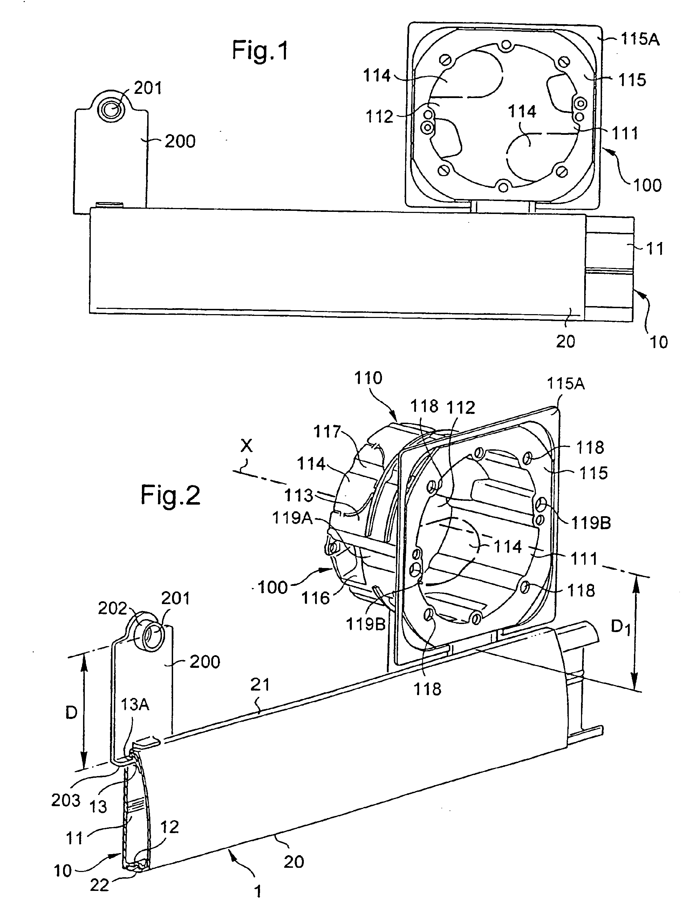

Sur les figures 1, 2, 4 et 5 on a représenté une boîte électrique 100 à encastrer dans un trou pratiqué dans une paroi, le long d'une goulotte 1 rapportée en saillie sur ladite paroi, comme cela sera expliqué plus en détail ultérieurement.

La goulotte 1 est ici une moulure qui comporte de manière classique un socle 10 dont le fond 11 plat, destiné à être appliqué contre la face avant de la paroi d'encastrement, est bordé longitudinalement par des ailes latérales 12, 13 qui s'élèvent perpendiculairement au fond 11. Le socle 10 comprend entre lesdites ailes latérales 12, 13 une ouverture longitudinale de sorte qu'il présente une section de forme en U. La goulotte 1 comporte en outre un couvercle 20 destiné à fermer l'ouverture longitudinale du socle 10. Ici le couvercle 20 est dit recouvrant du fait qu'il comporte des bords tombants 21, 22 destinés à recouvrir les ailes latérales 12, 13 du socle 10.

Selon l'exemple représenté, la fixation du couvercle 20 sur le socle 10 de la goulotte 1 est réalisée par encliquetage d'une nervure 22A qui court longitudinalement sur la face interne d'un bord tombant 22 du couvercle 20 dans une rainure longitudinale 12A prévue en creux sur l'aile latérale 12 correspondante du socle 10.

Cette boîte électrique 100 comporte un corps de boîte 110 dont le volume intérieur forme un logement adapté à recevoir au moins un mécanisme d'appareillage électrique (non représenté), et un pied 120, prolongeant latéralement le corps de boîte électrique 110, dont le volume intérieur communiquant avec ledit logement est adapté à recevoir des conducteurs électriques (non représentés) nécessaires à la desserte dudit mécanisme d'appareillage.

Comme le montrent plus particulièrement les figures 2, 4 et 5, le corps de boîte 110 comporte un fond 112, une paroi latérale 113 sensiblement cylindrique de révolution autour d'un axe X qui définit intérieurement ledit logement, et une ouverture frontale 111 prévue à l'opposé du fond 112 pour l'introduction du mécanisme d'appareillage électrique (non représenté) dans ledit logement du corps de boîte 110.

La paroi latérale 113 comporte à proximité du fond 112 des entrées 114 de gaines d'amenée de câbles et/ou de conducteurs électriques (non représentées). Ces entrées 114 sont fermées par des parois défonçables.

Avantageusement, l'ouverture frontale 111 du corps de boîte 110 est bordée par une collerette 115 qui est destinée à prendre appui sur la paroi d'encastrement afin d'éviter notamment que ladite boîte électrique 100 ne s'enfonce trop dans le trou d'encastrement. Cette collerette 115 comprend au moins un aménagement pour recevoir un moyen (non représenté) pour injecter de la colle entre ladite boîte électrique 100 et la paroi dans laquelle ladite boîte électrique 100 est encastrée.

Ici, ladite collerette 115 vient de formation avec le corps de boîte 110 de ladite boîte électrique 100 qui est réalisée par moulage d'une matière plastique transparente, mais selon une variante de réalisation non représentée on peut prévoir que ladite collerette soit une pièce rapportée sur ledit corps de boîte 110.

La collerette 115 est pourvue d'au moins un orifice traversant 118 (ici quatre orifices traversants) adapté à recevoir ledit moyen d'injection de colle.

En outre, la paroi latérale 113 du corps de boîte 110 de la boîte électrique 100 est pourvue de conduits 117 d'amenée de colle qui s'étendent selon l'axe X dudit corps de boîte 110 au droit des orifices traversants 118 de la collerette 115.

Chaque conduit 117 d'amenée de colle est une gorge prévue en creux sur la face externe de ladite paroi latérale 113.

Selon le mode de réalisation représenté sur les figures, chaque conduit 117 d'amenée de colle s'étend sur toute la hauteur (du bord de l'ouverture frontale 111 au bord du fond 112) du corps de boîte 110.

Le corps de boîte 110 de la boîte électrique 100 comprend des moyens d'accrochage mécanique à la paroi dans laquelle il est encastré. Ces moyens d'accrochage sont particulièrement adaptés à fixer la boîte électrique 100 dans un trou d'une paroi creuse telle qu'une cloison alvéolaire.

A cet effet, la paroi latérale 113 comporte, sur sa face externe, au moins un renfoncement longitudinal 119A (ici deux renfoncements identiques diamétralement opposés) qui s'étend parallèlement à l'axe X depuis le bord de ladite ouverture frontale 111 jusqu'à proximité du fond 112 du corps de boîte 110 où il débouche latéralement dans un logement 116 destiné à accueillir une griffe (non représentée) constituant lesdits moyens d'accrochage.

Il est prévu également des moyens d'actionnement de ladite griffe aptes à faire prendre à ladite griffe une position en saillie de la face externe de ladite paroi latérale 113 pour l'ancrage du corps de boîte 110 à l'intérieur de la paroi d'encastrement.

Plus particulièrement chaque griffe est apte à prendre deux positions, à savoir, d'une part, une position rétractée à l'intérieur dudit logement 116 de sorte qu'elle se trouve placée à l'intérieur du gabarit du corps de boîte 110 pour l'engagement de celui-ci à l'intérieur du trou de la paroi d'encastrement considérée, et, d'autre part, une position en saillie de la face externe de la paroi latérale 113 du corps de boîte 110 pour l'ancrage du corps de boîte 110 à l'intérieur du trou.

Lesdits moyens d'actionnement comprennent préférentiellement une vis dont le corps fileté reçu dans le renfoncement 119A coopère par vissage avec la griffe.

La collerette 115 du corps de boîte 110 comporte un puits 119B de réception de la tête de chaque vis de manière que ladite tête est accessible du côté de l'ouverture frontale 111 du corps de boîte 110. Ce puits est percé dans son fond d'un trou de passage du corps fileté de ladite vis. Chaque vis, qui traverse la collerette 115, est fixe en translation et libre en rotation autour de son axe.

Lesdits moyens d'actionnement de la griffe comprennent également une rampe (non visible sur les figures) prévue sur ladite paroi latérale 113 du corps de boîte 110.

Par ailleurs, avantageusement, ladite collerette 115 est entourée d'un cadre carré 115A détachable. Ce cadre 115A est rattaché ponctuellement à ladite collerette 115 par des liaisons sécables. Il prend appui sur la face avant de la paroi d'encastrement lorsque ladite boîte électrique 100 est engagée dans le trou d'encastrement et il est destiné à recevoir en appui la plaque enjoliveur 300 de l'appareillage électrique dont le mécanisme est introduit dans le logement de ladite boîte électrique. De cette manière, le cadre 115A supprime le jeu éventuel existant en ladite plaque enjoliveur et ladite paroi d'encastrement, ce jeu étant dû à l'épaisseur non nulle de la collerette 115 en appui sur la face avant de ladite paroi d'encastrement.

Aux fins de fixation du support du mécanisme d'appareillage, le corps de boîte 110 comporte des conduits de réception de vis de fixation qui débouchent en façade dans ladite collerette 115.

Le pied 120 est défini par un fond 120A et deux parois longitudinales 121A, 122A, qui s'étendent sensiblement parallèlement l'une à l'autre, à une distance l'une de l'autre, qui, dans la forme de réalisation représentée, est inférieure à la largeur du logement intérieur du corps de boîte 110, et, perpendiculairement aux parois longitudinales 121A, 122A, une paroi transversale d'extrémité 123.

Par cette paroi transversale d'extrémité 123, la boîte électrique 100 est adaptée à porter à plat, si désiré, sur une quelconque surface d'appui qui peut être soit un plancher ou bien une surface appartenant par exemple à l'un ou l'autre des montants d'un chambranle.

Le pied 120 comporte, tout comme le corps de boîte 110, à l'opposé du fond 120A, une ouverture frontale 120B qui s'étend sur pratiquement toute la longueur dudit pied 120, de sorte que le volume intérieur dudit pied 120 est au moins en partie accessible de l'avant pour le passage des câbles et/ou conducteurs électriques provenant du socle 10 de la goulotte 1.

Le volume intérieur du pied 120 communique avec le logement du corps de boîte 110 par une ouverture 124 située dans ladite paroi latérale 113. D'ailleurs lesdites parois longitudinales 121A, 122A du pied 120 s'étendent à partir de ladite paroi latérale 113 selon une direction sensiblement perpendiculaire à l'axe X du corps de boîte 110.

Avantageusement selon l'invention, le pied comporte deux parties 121, 122, à savoir, une partie fixe 121 rattachée au corps de boîte 110 et une partie mobile 122 par rapport à ladite partie fixe 121.

La partie fixe est ici réalisée d'une seule pièce avec le corps de boîte 110 par moulage d'une matière plastique.

La partie mobile peut être rapportée par emboîtement sur ladite partie fixe. A cet effet, la partie mobile comporte des moyens d'emboîtement adaptés à coopérer avec des moyens d'emboîtement complémentaires échelonnés sur la longueur de la partie fixe.

Préférentiellement, ladite partie mobile 122 est une partie télescopique qui coulisse par rapport à ladite partie fixe 121.

Ainsi, la longueur du pied 120 peut être raccourcie ou augmentée pour être adaptée à différentes largeurs de socle 10 de goulotte 1 de façon que le pied 120 s'étend sur toute la largeur de ladite goulotte.

Avantageusement, comme le montrent les figures 1, 2, 4 et 5, la boîte électrique 100 selon l'invention, comporte en saillie un moyen d'arrimage 130 au socle 10 de la goulotte 1, agencé pour indexer la position du corps de boîte 110 dans ledit trou par rapport à celle dudit socle 10 de la goulotte 1.

Ce moyen d'arrimage 130 est situé sur la face avant de ladite boîte électrique 100. Ici il est situé en façade dudit pied 120 à proximité de la jonction entre les volumes intérieurs du pied 120 et du corps de boîte 110.

Selon l'exemple représenté, le moyen d'arrimage comprend une nervure 130 qui s'étend transversalement à l'axe longitudinal dudit pied 120 et qui est apte à s'engager dans une rainure 13A qui court sur un côté longitudinal dudit socle 10.

Avantageusement, ledit moyen d'arrimage 130 est réalisé d'une seule pièce avec la boîte électrique 100 par moulage d'une matière plastique, ici une matière plastique transparente, mais selon une variante non représentée on peut prévoir que ledit moyen d'arrimage soit une pièce rapportée sur ladite boîte électrique.

A ce sujet, selon l'invention, il peut être prévu que la collerette 115 soit une pièce autonome rapportée sur une boîte électrique quelconque à encastrer dans une paroi le long d'une goulotte rapportée en saillie sur ladite paroi, cette collerette étant destinée à border extérieurement l'ouverture frontale de ladite boîte électrique et comprenant un moyen d'arrimage au socle de ladite goulotte agencé pour indexer la position de la boîte électrique dans ledit trou par rapport à celle dudit socle de la goulotte.

Dans ce cas, le moyen d'arrimage est avantageusement une nervure située sur la face avant de ladite collerette.

Par ailleurs, préférentiellement, comme le montrent les figures 1 à 4, 7A et 7B, la boîte électrique 100 comporte un accessoire de pose 200 agencé pour indexer la position d'un centreur 31 d'un outil de perçage 30, adapté à réaliser dans ladite paroi le trou de réception de ladite boîte électrique 100, par rapport à la position du socle 10 de la goulotte 1.

Cet accessoire de pose 200 se présente ici sous la forme d'une plaquette qui comporte en face avant un moyen d'arrimage 203 au socle 10 de la goulotte 1 et un moyen de positionnement 201 du centreur 31 qui sont séparés l'un de l'autre d'une distance D égale à la distance D1 séparant l'axe X du corps de boîte 110 de ladite boîte électrique 100 de son moyen d'arrimage 130 au socle 10 de la goulotte 1.

Le moyen d'arrimage de l'accessoire de pose 200 comprend une nervure 203 qui s'étend transversalement à l'axe longitudinal dudit accessoire de pose 200 et qui est apte à s'engager dans ladite rainure 13A qui court sur le côté longitudinal dudit socle 10.

Ledit moyen de positionnement est un orifice traversant 201 qui accueille le centreur 31. Cet orifice traversant 201 est bordé, du côté de la face avant de l'accessoire de pose 200, d'un rebord 202 qui participe au maintien du centreur 31 dans ledit orifice traversant 201.

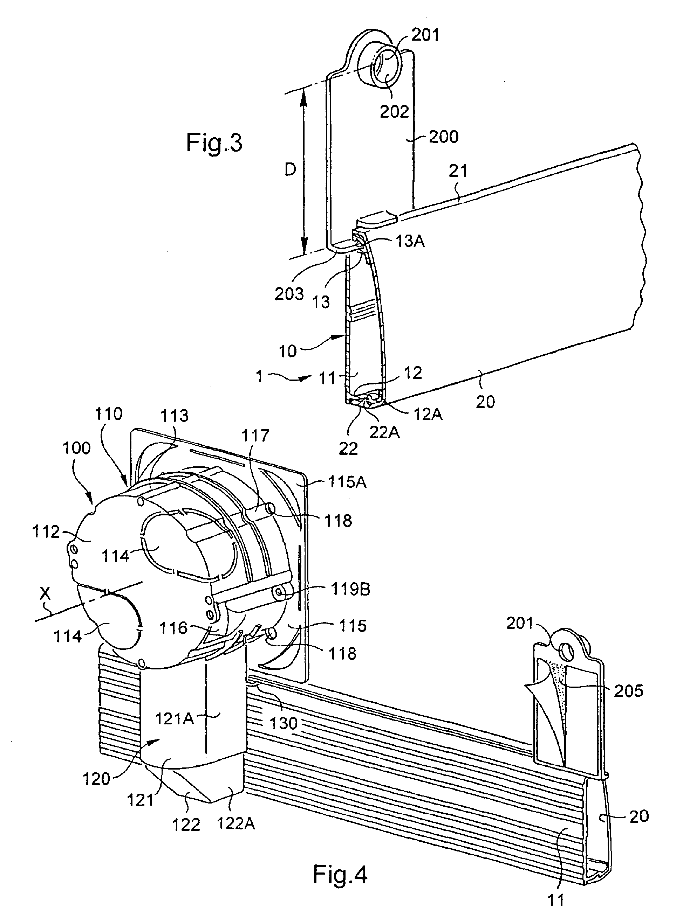

Comme le montre la figure 4, sur sa face arrière, l'accessoire de pose 200 comporte une enduction de matière collante 205 qui permet de fixer temporairement l'accessoire de pose 200 à la paroi d'encastrement P pour réaliser à l'aide de l'outil de perçage 30 le trou T destiné à accueillir la boîte électrique 100.

Selon un modèle de réalisation préférentiel de l'invention, l'accessoire de pose 200 vient de formation avec ladite boîte électrique 100 par moulage d'une matière plastique et est rattaché à celle-ci par une liaison sécable. De cette manière, l'accessoire de pose 200 est imperdable et peut être détaché de ladite boîte électrique 100 pour être utilisé.

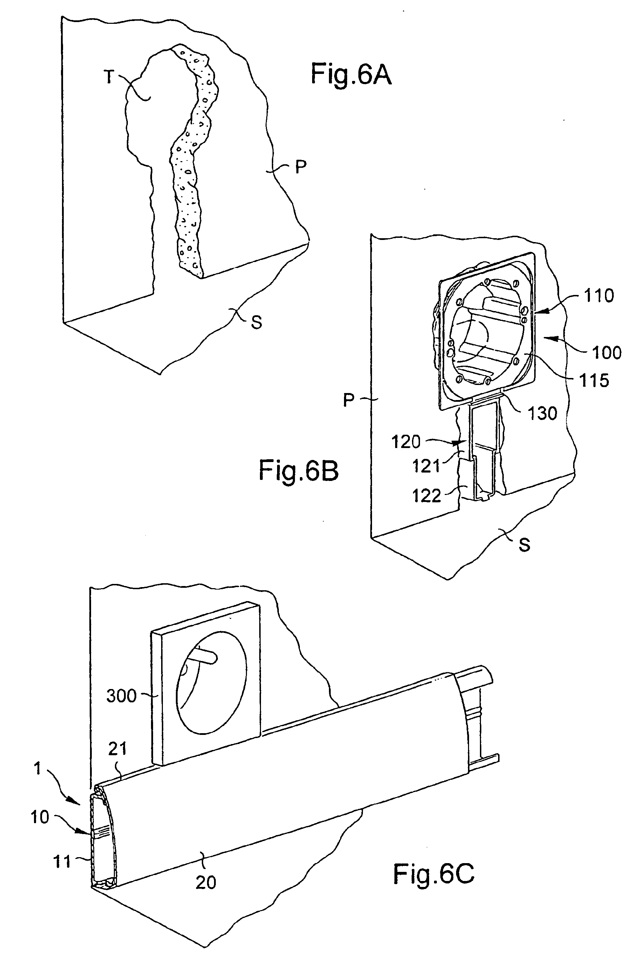

Sur les figures 6A à 6B, on a représenté les étapes essentielles d'un procédé d'encastrement dans une paroi P de la boîte électrique 100 précédemment décrite, le long d'une goulotte 1 à rapporter en saillie sur ladite paroi P, ici une paroi pleine.

Selon la première étape de ce procédé représentée sur la figure 6A, on réalise un trou T dans ladite paroi P à l'aide d'un outil de perçage. Ce trou T comporte une partie circulaire destinée à accueillir le corps de boîte 110 cylindrique de la boîte électrique 100 ainsi qu'une partie linéaire qui s'étend depuis ladite partie circulaire jusqu'à une surface d'appui S, ici le plancher à partir duquel s'élève la paroi P. Cette partie linéaire est destinée à recevoir le pied 120 de la boîte électrique 100.

En pratique, il n'est pas nécessaire que la paroi transversale d'extrémité 123 du pied 120 s'appuie contre la surface d'appui S, car il suffit que la partie mobile 122 du pied 120 descende au niveau du compartiment du socle 10 logeant les conducteurs et/ou les câbles électriques prévus pour être raccordés à l'appareillage électrique logé dans ladite boîte électrique.

Selon la deuxième étape de ce procédé représentée sur la figure 6B, on place ladite boîte électrique 100 dans le trou T pratiqué dans la paroi P.

La collerette 115 du corps de boîte 110 s'appuie sur la face avant de la paroi P ce qui permet d'éviter que la boîte électrique 100 ne s'enfonce trop dans ledit trou T.

De plus, la position de la partie mobile 122 du pied 120 est ajustée par rapport à la partie fixe 121 de manière que la paroi transversale d'extrémité 123 du pied 120 solidaire de ladite partie mobile 122 s'appuie contre la surface d'appui S.

Puis comme le montre la figure 6C, on rapporte le socle 10 de goulotte 1 sur ladite paroi P de façon à arrimer ladite boîte électrique 100 au socle 10 afin d'ajuster sa position dans le trou T par rapport audit socle 10. Ici, la goulotte 1 court en plinthe sur la paroi P.

On fixe alors le socle 10 de la goulotte 1 sur ladite paroi P et la boîte électrique 100 dans sa position ajustée dans ledit trou T.

La fixation de la boîte électrique 100 peut avantageusement être réalisée par collage.

On positionne alors la buse d'injection d'un pistolet ou d'un récipient de colle dans l'orifice traversant 118 correspondant de la collerette 115, et l'on injecte la colle contenue dans ledit récipient entre la paroi latérale 113 du corps de boîte 110 et la paroi P.

Lors de son injection, la colle s'écoule dans lesdits conduits 117 d'amenée de colle prévus sur la face externe de la paroi latérale 113 du corps de boîte 110 de la boîte électrique 100 pour se répartir uniformément dans l'espace libre existant entre la paroi P et la boîte électrique 100.

La collerette 115 qui s'appuie contre la face avant de la paroi P forme avantageusement un obstacle qui évite à la colle injectée de remonter et de déborder sur la face avant de ladite paroi P. Ainsi aucune opération de nettoyage de ladite paroi n'est nécessaire.

Avantageusement la matière transparente constituant ladite boîte électrique 100 permet à l'installateur de contrôler la quantité et la répartition de la colle qu'il injecte dans le trou d'encastrement.

Lorsque la paroi d'encastrement est une paroi creuse, pour fixer par collage ladite boîte électrique 100 dans une paroi creuse on peut réaliser (sans que cela soit nécessaire), préalablement à l'injection de colle, un joint entre la paroi creuse et ladite boîte électrique 100 pour éviter que la colle injectée dans le trou d'encastrement ne s'écoule dans les alvéoles de cette dernière.

En l'absence de joint, l'excédent de colle qui a tendance à gonfler renforce la tenue de la boîte électrique dans ladite paroi.

Dans une paroi creuse, l'installateur peut préfixer la boîte électrique 100 avant collage grâce auxdits moyens d'accrochage qu'elle comporte.

Plus particulièrement pour préfixer ladite boîte électrique 100 dans le trou de la paroi creuse l'installateur visse chacune des vis pour faire monter chaque griffe le long de la paroi latérale 113 du corps de boîte 110 de la boîte électrique 100.

Tout d'abord, la griffe, sous l'action de la vis, se déplace dans son logement, coopère alors avec la rampe correspondante et pivote pour sortir de son logement et prendre la position en saillie de la paroi latérale 113 du corps de boîte 110 de la boîte électrique 100.

Puis, chaque griffe, positionnée en saillie de la paroi latérale 113, monte le long de celle-ci pour venir prendre appui contre la face arrière de la paroi creuse concernée afin de retenir la boîte électrique 100 au sein du trou de ladite paroi creuse avant qu'elle ne soit collée par injection de colle au travers desdits orifices traversants 118 de la collerette 115.

Après un temps de séchage de la colle, on rapporte le mécanisme d'appareillage dans la boîte électrique 100, on câble ledit mécanisme d'appareillage puis on rapporte sur le socle 10 de la goulotte 1 son couvercle 20 et l'on fixe sur le mécanisme d'appareillage la plaque enjoliveur 300 (ici une plaque de prise de courant) dont un bord vient parfaitement à effleurement du couvercle 20 de la goulotte 1.

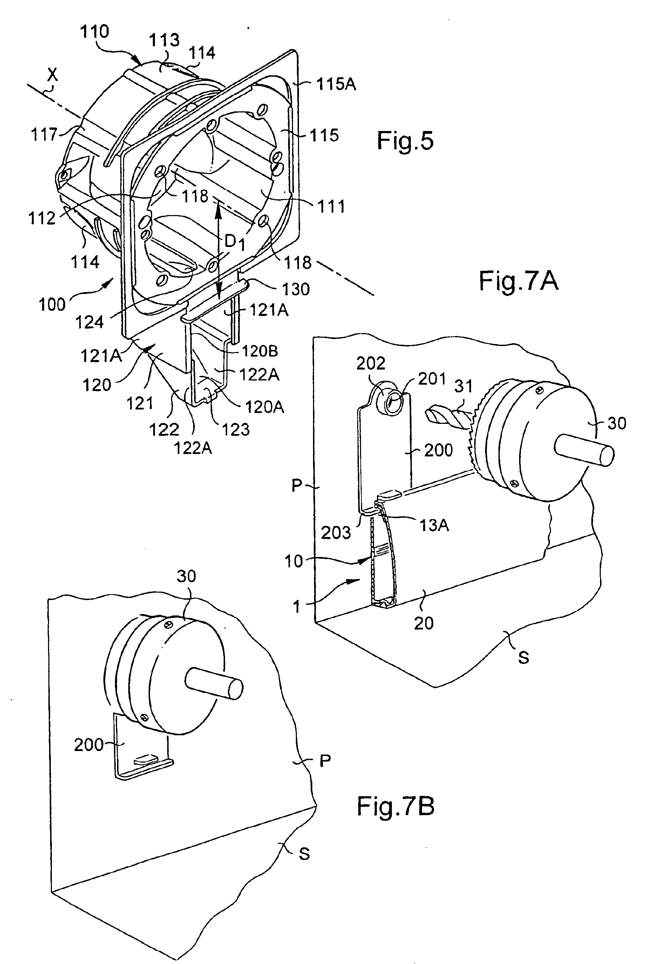

Comme le montrent plus particulièrement les figures 7A et 7B, selon un mode préférentiel de ce procédé d'encastrement, pour réaliser le trou T dans la paroi P on arrime l'accessoire de pose 200 au socle 10 de la goulotte 1, et l'on place la goulotte 1 à l'emplacement voulu sur la paroi P de manière à plaquer sur ladite paroi P l'accessoire de pose arrimé. On fixe temporairement par collage ou par un autre moyen de fixation ledit accessoire de pose 200 à ladite paroi P, et on enlève le socle 10 de la goulotte 1 de ladite paroi pour réaliser le trou T. Pour ce faire on positionne le centreur 31 de l'outil de perçage 30 dans lesdits moyens de positionnement 201, 202 de l'accessoire de pose 200 et on perce la paroi P avec l'outil de perçage 30 en détruisant ledit accessoire de pose 200. Puis, à l'aide d'un burin, ou de tout autre appareil à rainurer, on prolonge latéralement ledit trou par la partie ou portion linéaire accueillant le pied de la boîte électrique. De cette manière, la partie circulaire du trou réalisé est parfaitement positionnée par rapport à l'emplacement de la goulotte 1 sur la paroi P.

La présente invention n'est nullement limitée au mode de réalisation décrit et représenté, mais l'homme du métier saura y apporter toute variante conforme à son esprit.

## Revendications

1. Boîte électrique (100) à encastrer dans un trou pratiqué dans une paroi, le long d'une goulotte (1) rapportée en saillie sur ladite paroi, boîte électrique comportant un corps de boîte (110) dont le volume intérieur forme un logement adapté à recevoir au moins un appareillage électrique, et un pied (120), prolongeant latéralement le corps de boîte (110), dont le volume intérieur communiquant avec ledit logement est adapté à recevoir des conducteurs électriques nécessaires à la desserte dudit appareillage électrique, **caractérisée en ce qu'**elle comporte en saillie un moyen d'arrimage (130) au socle (10) de la goulotte (1), agencé pour indexer la position du corps de boîte (110) dans ledit trou par rapport à celle dudit socle (10) de la goulotte.

2. Boîte électrique (100) selon la revendication 1, **caractérisée en ce que** le moyen d'arrimage (130) est situé sur la face avant de ladite boîte électrique.

3. Boîte électrique (100) selon l'une des revendications 1 ou 2, **caractérisée en ce que** ledit moyen d'arrimage (130) est situé en façade dudit pied (120) à proximité de la jonction entre les volumes intérieurs du pied (120) et du corps de boîte (110).

4. Boîte électrique (100) selon l'une des revendications 1 à 3, **caractérisée en ce que** ledit moyen d'arrimage comprend une nervure (130) qui s'étend transversalement à l'axe longitudinal dudit pied et qui est apte à s'engager dans une rainure (13A) qui court sur un côté longitudinal dudit socle (10).

5. Boîte électrique (100) selon l'une des revendications 1 à 4, **caractérisée en ce que** ledit moyen d'arrimage (130) est réalisé d'une seule pièce avec la boîte électrique par moulage d'une matière plastique.

6. Boîte électrique (100) selon l'une des revendications 1 à 4, **caractérisée en ce que** ledit moyen d'arrimage est une pièce rapportée sur ladite boîte électrique.

7. Boîte électrique (100) selon l'une des revendications 1 à 6, **caractérisée en ce que** le pied (120) comporte deux parties, à savoir une partie fixe (121) rattachée au corps de boîte (110) et une partie mobile (122) par rapport à ladite partie fixe (121).

8. Boîte électrique (100) selon la revendication 7, **caractérisée en ce que** ladite partie mobile (122) est une partie télescopique qui coulisse par rapport à ladite partie fixe (121).

9. Boîte électrique (100) selon l'une des revendications 1 à 8, **caractérisée en ce qu'**elle comporte un accessoire de pose (200) agencé pour indexer la position d'un centreur (31) d'un outil de perçage (30), adapté à réaliser dans ladite paroi le trou de réception de ladite boîte électrique, par rapport à la position du socle de la goulotte, cet accessoire de pose (200) comportant un moyen d'arrimage (203) au socle (10) de la goulotte (1) et un moyen de positionnement (201,202) dudit centreur (31) qui sont séparés l'un de l'autre d'une distance (D) égale à la distance (D1) séparant l'axe perpendiculaire à l'ouverture de ladite boite électrique de son moyen d'arrimage (130) au socle (10) de la goulotte (1).

10. Boîte électrique (100) selon la revendication 9, **caractérisée en ce que** le moyen d'arrimage comprend une nervure (203) qui s'étend transversalement à l'axe longitudinal dudit accessoire de pose (200) et qui est apte à s'engager dans une rainure (13A) qui court sur un côté longitudinal dudit socle (10).

11. Boîte électrique (100) selon l'une des revendications 9 ou 10, **caractérisée en ce que** ledit moyen de positionnement est un orifice traversant (201) qui accueille le centreur.

12. Boîte électrique selon l'une des revendications 9 à 11, **caractérisée en ce que** l'accessoire de pose se présente sous la forme d'une plaquette dont la face avant porte ledit moyen d'arrimage (203).

13. Boîte électrique (100) selon l'une des revendications 9 à 11, **caractérisée en ce que** l'accessoire de pose (200) vient de formation avec ladite boîte électrique (100) par moulage d'une matière plastique et est rattaché à celle-ci par une liaison sécable.

14. Collerette (115) adaptée à être rapportée sur une boîte électrique à (100) encastrer dans un trou pratiqué dans une paroi, le long d'une goulotte (1) rapportée en saillie sur ladite paroi, cette collerette étant destinée à border extérieurement l'ouverture frontale de ladite boîte électrique (100) et comprenant un moyen d'arrimage (130) au socle de ladite goulotte agencé pour indexer la position de la boîte électrique dans ledit trou par rapport à celle dudit socle de la goulotte.

15. Collerette selon la revendication 14, **caractérisée en ce que** le moyen d'arrimage (130) est situé sur la face avant de ladite collerette (115).

16. Collerette selon l'une des revendications 14 ou 15, **caractérisée en ce que** ledit moyen d'arrimage (130) est une nervure.

17. Procédé d'encastrement dans une paroi de la boîte électrique selon l'une des revendications 1 à 13 ou d'une boîte électrique quelconque équipée d'une collerette selon l'une des revendications 14 à 16, le long d'une goulotte à rapporter en saillie sur ladite paroi (P), **caractérisé en ce qu'**il comprend les étapes suivantes :
a) on réalise un trou (T) dans ladite paroi (P) à l'aide d'un outil de perçage,
b) on place ladite boîte électrique (100) dans le trou (T) pratiqué dans la paroi (P),
c) on rapporte le socle (10) de goulotte sur ladite paroi (P) de façon à arrimer ladite boîte électrique (100) audit socle (10) afin d'ajuster sa position dans le trou (T) par rapport audit socle (10), et
d) on fixe le socle (10) de goulotte sur ladite paroi (P) et la boîte électrique (100) dans sa position ajustée dans ledit trou (T).

18. Procédé selon la revendication 17 pour l'encastrement d'une boîte électrique selon la revendication 9, **caractérisé en ce que** préalablement à l'étape a) on réalise les étapes suivantes :
1) on arrime l'accessoire de pose (200) au socle (10) de la goulotte (1),
2) on place le socle (10) de la goulotte (1) à l'emplacement voulu sur la paroi de manière à plaquer sur ladite paroi (P) l'accessoire de pose (200) arrimé,
3) on fixe temporairement ledit accessoire de pose (200) à ladite paroi (P), et
4) on enlève le socle (10) de la goulotte (1) de ladite paroi (P).

## Claims

1. An electrical box (100) for flush mounting in a hole formed in a wall and along a duct (1) surface mounted on said wall, the electrical box comprising a box body (110) having an inside volume that forms a housing adapted to receive at least one piece of electrical equipment, and a leg (120) extending from the side of the box body (110), the leg having an inside volume communicating with said housing and adapted to receive the electrical conductors needed for serving said piece of electrical equipment, the box being **characterized in that** it includes projecting connection means (130) for connecting to the base (10) of the duct (1) and arranged to index the position of the box body (110) in said hole relative to the position of said base (10) of the duct.

2. An electrical box (100) according to claim 1, **characterized in that** the connection means (130) are situated on the front face of said electrical box.

3. An electrical box (100) according to claim 1 or claim 2, **characterized in that** said connection means (130) are situated on the front face of said leg (120) close to the junction between the inside volumes of the leg (120) and of the box body (110).

4. An electrical box (100) according to any one of claims 1 to 3, **characterized in that** said connection means comprise a rib (130) that extends transversely to the longitudinal axis of said leg and that is suitable for engaging in a groove (13A) that runs in a longitudinal side of said base (10).

5. An electrical box (100) according to any one of claims 1 to 4, **characterized in that** said connection means (130) are made integrally with the electrical box by molding a plastics material.

6. An electrical box (100) according to any one of claims 1 to 4, **characterized in that** said connection means comprise a part fitted to said electrical box.

7. An electrical box (100) according to any one of claims 1 to 6, **characterized in that** the leg (120) comprises two portions, namely a stationary portion (121) attached to the box body (110) and a movable portion (122) that is movable relative to said stationary portion (121).

8. An electrical box (100) according to claim 7, **characterized in that** said movable portion (122) is a telescopic portion that is slidable relative to said stationary portion (121).

9. An electrical box (100) according to any one of claims 1 to 8, **characterized in that** it includes a laying accessory (200) arranged to act on the position of a centralizer (31) of a drilling tool (30) that is adapted to make the hole for receiving said electrical box in said wall, to index said position relative to the position of the base of the duct, said laying accessory (200) comprising connection means (203) for connection to the base (10) of the duct (1) and positioning means (201, 202) for positioning said centralizer (31), which connection means and positioning means are spaced apart from each other by a distance (D) equal to the distance (D1) between the axis perpendicular to the opening of said electrical box and its means (130) for connection to the base (10) of the duct (1).

10. An electrical box (100) according to claim 9, **characterized in that** the connection means comprise a rib (203) that extends transversely to the longitudinal axis of said laying accessory (200) and that is suitable for engaging in a groove (13A) that runs along a longitudinal side of said base (10).

11. An electrical box (100) according to claim 9 or claim 10, **characterized in that** said positioning means comprise a through orifice (201) that receives the centralizer.

12. An electrical box according to any one of claims 9 to 11, **characterized in that** the laying accessory is in the form of a plate having its font face carrying said connection means (203).

13. An electrical box (100) according to any one of claims 9 to 11, **characterized in that** the laying accessory (200) is integrally formed with said electrical box (100) by molding a plastics material, and is attached thereto via a breakable connection.

14. A collar (115) suitable for being fitted on an electrical box (100) for flush mounting in a hole formed in a wall along a duct (1) surface mounted on said wall, the collar being designed to surround the outside of the front opening in said electrical box (100) and including connection means (130) for connection to the base of said duct, the connection means being arranged to index the position of the electrical box in said hole relative to the position of said base of the duct.

15. A collar according to claim 14, **characterized in that** the connection means (130) are situated on the front face of said collar (115).

16. A collar according to claim 14 or claim 15, **characterized in that** said connection means (130) comprise a rib.

17. A method of engaging in a wall the electrical box according to any one of claims 1 to 13, or any electrical box fitted with a collar according to any one of claims 14 to 16, along a duct for surface mounting on said wall (P), the method being **characterized in that** it comprises the following steps:
a) making a hole (T) in said wall (P) with a drilling tool;
b) placing said electrical box (100) in the hole (T) formed in the wall (P);
c) fitting the base (10) of the duct on said wall (P) so as to connect said electrical box (100) to said base (10) in order to adjust its position in the hole (T) relative to said base (10); and
d) fastening the base (10) of the duct on said wall (P) and the electrical box (100) in its adjusted position in said hole (T).

18. A method according to claim 17, for flush mounting an electrical box according to claim 9, **characterized in that** prior to step a), the following steps are performed:
1) connecting the laying accessory (200) to the base (10) of the duct (1);
2) placing the base (10) of the duct (1) in the desired position on the wall in such a manner as to press the connected laying accessory (200) against said wall (P);
3) temporarily fastening said laying accessory (200) to said wall (P); and
4) removing the base (10) of the duct (1) from said wall (P).

## Patentansprüche

1. Anschlussdose (100) zum Einbau in einem Loch in einer Wand entlang einem auf der Wand aufgesetzten Kabelkanal (1), wobei die Anschlussdose ein Gehäuse (110) hat, dessen Innenraum eine Aussparung bildet, die mindestens ein elektrisches Gerät aufnehmen kann, sowie einen Fuß (120), der das Gehäuse (110) seitlich verlängert und dessen mit der Aussparung in Verbindung stehender Innenraum die für die elektrische Versorgung des elektrischen Geräts erforderlichen elektrischen Leiter aufnehmen kann, **dadurch gekennzeichnet, dass** sie ein hervorstehendes Mittel zum Befestigen (130) am Sockel (10) des Kabelkanals (1) umfasst, um die Position des Gehäuses (110) in diesem Loch in Bezug auf die des Sockels (10) des Kabelkanals zu arretieren.

2. Anschlussdose (100) nach Anspruch 1, **dadurch gekennzeichnet, dass** sich das Mittel zum Befestigen (130) auf der Vorderseite der Anschlussdose befindet.

3. Anschlussdose (100) nach einem der Ansprüche 1 oder 2, **dadurch gekennzeichnet, dass** sich das Mittel zum Befestigen (130) auf der Frontseite des Fußes (120) in der Nähe der Verbindung zwischen den Innenräumen des Fußes (120) und des Gehäuses (110) befindet.

4. Anschlussdose (100) nach einem der Ansprüche 1 bis 3, **dadurch gekennzeichnet, dass** das Mittel zum Befestigen eine Rippe (130) umfasst, die sich quer zur Längsachse des Fußes erstreckt und in eine Rille (13A) eingreifen kann, die auf einer Längsseite des Sockels (10) verläuft.

5. Anschlussdose (100) nach einem der Ansprüche 1 bis 4, **dadurch gekennzeichnet, dass** das Mittel zum Befestigen (130) durch Formgießen eines Kunststoffes aus einem Teil mit dem Gehäuse realisiert wird.

6. Anschlussdose (100) nach einem der Ansprüche 1 bis 4, **dadurch gekennzeichnet, dass** das Mittel zum Befestigen ein auf die Anschlussdose aufgesetztes Teil ist.

7. Anschlussdose (100) nach einem der Ansprüche 1 bis 6, **dadurch gekennzeichnet, dass** der Fuß (120) zwei Abschnitte umfasst, nämlich einen festen, mit dem Gehäuse der Dose (110) verbundenen Abschnitt (121), sowie einen in Bezug zum festen Abschnitt (121) beweglichen Abschnitt (122).

8. Anschlussdose (100) nach Anspruch 7, **dadurch gekennzeichnet, dass** der bewegliche Abschnitt (122) ein teleskopischer Abschnitt ist, der in Bezug zum festen Abschnitt (121) gleitet.

9. Anschlussdose (100) nach einem der Ansprüche 1 bis 8, **dadurch gekennzeichnet, dass** sie ein Zubehör für die Montage (200) umfasst, um die Position einer Zentriervorrichtung (31) eines Bohrwerkzeuges (30), das das Loch für die Aufnahme der Anschlussdose in der Wand bohren kann, in Bezug auf die Position des Kabelkanalsockels zu arretieren, wobei dieses Zubehör für die Montage (200) ein Mittel zum Befestigen (203) am Sockel (10) des Kabelkanals (1) und ein Mittel zum Positionieren (201,202) der Zentriervorrichtung (31) umfasst, die voneinander um die gleiche Distanz (D) beabstandet sind wie die Distanz (D1) zwischen der zur Öffnung der Anschlussdose senkrechten Achse und dem Mittel zum Befestigen (130) am Sockel (10) des Kabelkanals (1).

10. Anschlussdose (100) nach Anspruch 9, **dadurch gekennzeichnet, dass** das Mittel zum Befestigen eine Rippe (203) umfasst, die sich quer zur Längsachse des Zubehörs zum Montieren (200) erstreckt und die in eine Rille (13A) eingreifen kann, die auf einer Längsseite des Sockels (10) verläuft.

11. Anschlussdose (100) nach einem der Ansprüche 9 oder 10, **dadurch gekennzeichnet, dass** das Mittel zum Positionieren eine durchgehende Öffnung (201) ist, die die Zentriervorrichtung aufnimmt.

12. Anschlussdose nach einem der Ansprüche 9 bis 11, **dadurch gekennzeichnet, dass** das Zubehör zum Montieren die Form eines Stegs annimmt, dessen Vorderseite das Mittel zum Befestigen (203) enthält.

13. Anschlussdose (100) nach einem der Ansprüche 9 bis 11, **dadurch gekennzeichnet, dass** das Zubehör für die Montage (200) durch Formgießen eines Kunststoffes zusammen mit der Anschlussdose (100) realisiert wird und mit dieser über eine abtrennbare Verbindung verbunden ist.

14. Klammer (115) zum Aufsetzen auf einer Anschlussdose (100), die in ein Loch in einer Wand entlang einem auf der Wand aufgesetzten Kabelkanal (1) eingebaut wird, wobei diese Klammer dazu bestimmt ist, die frontale Öffnung der Anschlussdose (100) außen einzufassen und ein Mittel zum Befestigen (130) am Sockel des Kabelkanals umfasst, mit dem auch die Position der Anschlussdose im Loch in Bezug auf die Position des Kabelkanalsockels arretiert wird.

15. Klammer nach Anspruch 14, **dadurch gekennzeichnet, dass** sich das Mittel zum Befestigen (130) auf der Vorderseite der Klammer (115) befindet.

16. Klammer nach einem der Ansprüche 14 oder 15, **dadurch gekennzeichnet, dass** das Mittel zum Befestigen (130) eine Rippe ist.

17. Einbauverfahren in eine Wand der Anschlussdose nach einem der Ansprüche 1 bis 13 oder einer beliebigen Anschlussdose mit einer Klammer nach einem der Ansprüche 14 bis 16, entlang einem auf der Wand (P) aufzusetzenden Kabelkanal, **dadurch gekennzeichnet, dass** es folgende Schritte umfasst:
a) man realisiert mit einem Bohrwerkzeug ein Loch (T) in der Wand (P)
b) man ordnet die Anschlussdose (100) im Loch (T) der Wand (P) an,
c) man setzt den Kabelkanalsockel (10) so auf die Wand (P) auf, dass die Anschlussdose (100) mit dem Sockel (10) befestigt wird, um ihre Position im Loch (T) in Bezug zum Sockel (10) zu justieren, und
c) man fixiert den Kabelkanalsockel (10) an der Wand (P) und die Anschlussdose (100) in der im Loch (T) justierten Position.

18. Verfahren nach Anspruch 17 für den Einbau einer Anschlussdose nach Anspruch 9, **dadurch gekennzeichnet, dass** vor dem Schritt a) folgende Schritte ausgeführt werden:
1) man befestigt das Zubehör für die Montage (200) am Sockel (10) des Kabelkanals (1),
2) man ordnet den Sockel (10) des Kabelkanals (1) so an der gewünschten Stelle an der Wand an, dass das befestigte Zubehör für die Montage (200) gegen die Wand (P) gedrückt wird,
3) man fixiert das Zubehör für die Montage (200) vorübergehend an der Wand (P), und
4) man entfernt den Sockel (10) des Kabelkanals (1) von der Wand (P).
